# EUROPÄISCHE PATENTSCHRIFT

(11) **EP 3 103 183 B1**
(45) Veröffentlichungstag und Bekanntmachung des Hinweises auf die Patenterteilung: **29.11.2017**
(21) Anmeldenummer: 15710758.2
(22) Anmeldetag: 13.03.2015
(51) Int. Cl.: H02K 1/24, H02K 7/04, H02K 19/14

(54) **RELUKTANZROTOR MIT MECHANISCHER STABILISIERUNG**
RELUCTANCE ROTOR WITH MECHANICAL STABILISATION
ROTOR À RÉLUCTANCE À STABILISATION MÉCANIQUE

(30) Priorität: 31.03.2014 EP 14162700
(43) Veröffentlichungstag der Anmeldung: 14.12.2016
(73) Patentinhaber: Siemens Aktiengesellschaft, 80333 München (DE)
(72) Erfinder: BALLWEG, Marion, 97494 Bundorf (DE); BÜTTNER, Klaus, 97618 Hollstadt (DE); KIRCHNER, Klaus, 97645 Ostheim (DE)
(86) Internationale Anmeldenummer: PCT/EP2015/055339
(87) Internationale Veröffentlichungsnummer: WO 2015/150055

(56) Entgegenhaltungen:
- GB-A- 2 310 544
- JP-A- 2001 238 418
- US-A1- 2012 222 289

## Beschreibung

Die Erfindung betrifft einen Rotor für einen Reluktanzrotor, einen Reluktanzmotor mit einem solchen Rotor und ein Kraftfahrzeug. Der Rotor weist mehrere elektrisch voneinander isolierte Einzelbleche auf, die zu einem Blechpaket gestapelt sind.

Ein Rotor für einen Reluktanzmotor ist aus der US 5,818,140 A bekannt. Der darin beschriebene Rotor hat ein Blechpaket aus geschichteten Rotorblechen, die Aussparungen, z.B. Ausstanzungen, aufweisen. Dieser Rotor ist hier auch als Vagati-Rotor bezeichnet. Durch die Ausstanzungen ergeben sich geschwungene, streifenförmige Blechabschnitte, die als Flussleitabschnitte dienen und den magnetischen Fluss in der für die Bereitstellung der Reluktanz des Rotors nötigen Weise führen. Zwischen den einzelnen Flussleitabschnitten befindet sich wegen der Ausstanzungen Luft, d. h. ein unmagnetischer Bereich, der als magnetische Flusssperre wirkt. Die Reaktanz des Blechpakets ist in Richtung der q-Achse, d. h. der magnetischen Sperrrichtung aufgrund der unmagnetischen Bereiche verhältnismäßig klein. Die streifenförmigen Flussleitabschnitte verlaufen quer zu der q-Achse und verbinden in Umfangsrichtung benachbarte Pole des Rotors, also die d-Achsen.

Die Aussparungen zum Bilden der Flusssperren führen zu einer Schwächung der mechanischen Stabilität des Blechpakets, so dass der beschriebene Reluktanzrotor nicht für große Drehzahlen, insbesondere nicht für Drehzahlen größer als 3.000 Umdrehungen/Minute geeignet ist. Aus diesem Grund sind heutige Reluktanzrotoren der beschriebenen Art nicht für die Drehzahlanforderung im Bereich von Kraftfahrzeugen mit elektrischen Antrieben geeignet.

Durch die streifenförmigen Flussleitabschnitte ergibt sich aber eine hohe Drehmomentausbeute.

In dem Dokument JP 2001 238418 A ist ein Reluktanzrotor mit einem Rotorblechpaket beschrieben, das ein Zwischenteil aus einem nicht-ferromagnetischen Material aufweisen kann und das Flusssperren aufweist, die mit Aluminium oder Kunstharz ausgegossen sind. Aus dem Aluminium können an axialen Enden des Rotors auch Kurzschlussringe angegossen sein.

Der Erfindung liegt die Aufgabe zugrunde, einen Reluktanzrotor der eingangs bezeichneten Art anzugeben, der sowohl ein hohes Drehmoment als auch eine hohe Drehzahl ermöglicht, so dass er insbesondere als Bestandteil eines elektrischen Antriebs für ein Elektrofahrzeug geeignet ist.

Die Aufgabe wird durch die Gegenstände der unabhängigen Patentansprüche gelöst. Vorteilhafte Weiterbildungen der Erfindung ergeben sind durch die Merkmale der Unteransprüche.

Der erfindungsgemäße Rotor ist ebenfalls als Reluktanzrotor nach dem Prinzip von Vagati ausgebildet, das heißt er weist Rotorblechschichten aus einem ferromagnetischen Material auf, wobei jede Rotorblechschicht aus einem oder mehreren Rotorblechen gebildet ist und zumindest eine durch eine Aussparung in der Rotorblechschicht gebildete Flusssperre aufweist. Natürlich kann jede Rotorblechschicht auch mehrere Flusssperren aufweisen. Im Folgenden ist der Übersichtlichkeit halber nur von einer einzelnen Flusssperre jeder Rotorblechschicht die Rede. Die Ausführungen treffen aber auch auf Rotorblechschichten mit mehreren Flusssperren zu.

In dem Reluktanzrotor ist zwischen einer ersten und einer zweiten Rotorblechschicht ein Zwischenteil angeordnet. Dieses Zwischenteil kann beispielsweise zylinderförmig oder scheibenförmig sein, das heißt die Grundform einer der Rotorblechschichten aufweisen. Das Zwischenteil weist Aussparungen sowie die Aussparungen voneinander abgrenzende Stege auf. Durch die Stege ist das Zwischenteil mechanisch stabiler als die beiden angrenzenden Rotorblechschichten, die weniger oder schmalere oder gar keine Stege aufweisen können. Die Aussparungen des Zwischenteils und dessen Stege sind derart zwischen den beiden Blechschichten angeordnet, dass sie sich zwischen den Flusssperren der beiden angrenzenden Rotorblechschichten befinden. Hierdurch bilden die Aussparungen des Zwischenteils sowie die Flusssperren, die ja ebenfalls Aussparungen in den Rotorblechschichten darstellen, gemeinsam einen Raum. Dieser durch die Aussparungen abgegrenzte Raum ist mit einer nicht-ferromagnetischen Vergussmasse ausgegossen. Mit nicht-ferromagnetisch ist hierbei gemeint, dass die Vergussmasse beispielsweise nur paramagnetische und/oder diamagnetische oder vollständig amagnetische Eigenschaften aufweisen kann. Insbesondere ist die Vergussmasse nicht weichmagnetisch.

Die Vergussmasse kann beispielsweise durch Spritzgießen oder Ausgießen des Raumes in den Reluktanzrotor eingebracht werden. Da hierbei die Flusssperren und die Aussparungen des Zwischenteils kommunizierte Hohlräume darstellen, kann die Vergussmasse an einem Ende des Reluktanzrotors eingebracht werden und sich von dort aus im Raum ausbreiten. Damit ist die Herstellung besonders einfach. Bevorzugt entspricht eine Kontur der Gesamtfläche der Aussparungen des Zwischenteils und der Stege zusammen der Kontur der angrenzenden Flusssperren. Hierdurch ergibt sich der Vorteil, dass beim Ausgießen oder Ausspritzen des Raumes mit Vergussmasse keine Lufteinschlüsse an den Rändern der Aussparungen bleiben.

Die Stege bilden eine mechanische Verstärkung des Reluktanzrotors. Die ausgehärtete Vergussmasse überträgt hierbei bei einer bestimmungsgemäßen Rotation des Reluktanzrotors wirkende Fliehkräfte von den Rotorblechschichten auf das Zwischenteil, so dass auch die Rotorblechschichten mechanisch stabilisiert sind.

Die Stege sind bevorzugt dazu ausgelegt, die Fliehkraft in dem Zwischenteil radial nach innen hin abzuleiten. Eine besonders effektive Kraftführung ergibt sich hierbei, wenn sich jeder Steg in seiner Längserstreckung zu einem Außenumfang des Reluktanzrotors hin erstreckt. Dann werden die Fliehkräfte als Zugkräfte entlang der Längserstreckung der Stege zum Inneren des Reluktanzrotors zur Welle hin übertragen.

Besonders vorteilhaft ist es, wenn sich jeder Steg in seiner Längserstreckung jeweils in einem spitzen Winkel oder parallel zu einer q-Achse des Reluktanzrotors erstreckt. Entlang der q-Achsen sind die Rotorblechschichten aufgrund des beschriebenen Verlaufs der Flusssperren besonders labil, so dass durch das Ausrichten der Stege entlang der q-Achsen der Stabilisierungseffekt besonders groß ist.

Eine weitere Verbesserung der mechanischen Stabilisierung ergibt sich, wenn ein Material des Zwischenteils zumindest in radialer Richtung des Reluktanzrotors eine größere Zugfestigkeit als das ferromagnetische Material der Rotorblechschichten aufweist.

Das Zwischenteil kann selbst als magnetisch aktives Bauteil wirken, das heißt es kann aus ferromagnetischem Material gebildet sein. Gemäß einer Ausführungsform ist das Zwischenteil aber aus einem nicht-ferromagnetischen Material gebildet, so dass die Stege nicht die Reluktanz des Rotors beeinträchtigen.

Durch die Vergussmasse sind die Rotorblechschichten und das Zwischenteil über einen Formschluss in radialer Richtung miteinander verbunden.

Gemäß einer vorteilhaften Weiterbildung ist die Vergussmasse auch elektrisch leitfähig. Unter elektrisch leitfähig ist hier insbesondere zu verstehen, dass ein Leitwert größer als 10 S/m, insbesondere größer als 1000 S/m ist. Eine elektrisch leitfähige Vergussmasse kann in vorteilhafter Weise zum Bereitstellen eines Anlaufkäfigs für einen asynchronen Anlauf des Reluktanzrotors genutzt werden.

Hierbei ergibt sich ein weiterer Vorteil, wenn an einem axialen Ende oder an beiden axialen Enden des Reluktanzrotors aus der Vergussmasse jeweils auch ein Kurzschlussring angeformt ist. Dann lässt sich der Kurzschlusskäfig vollständig mittels der Vergussmasse modellieren.

Die Vergussmasse ist für den Fall, dass sie elektrisch leitfähig ist, bevorzugt aus Aluminium oder einer Aluminiumlegierung oder aus einem Kunststoff mit elektrisch leitfähigem Füllstoff, beispielsweise elektrisch leitfähigen Fasern, wie beispielsweise Carbon-Nanotubes, oder einem elektrisch leitfähigen Granulat gebildet.

Eine elektrisch isolierende und dennoch mechanisch stabile Vergussmasse kann mittels eines fasergefüllten Kunststoffes, beispielsweise glasfasergefüllten Kunststoffes, oder eines fasergefüllten Harzes bereitgestellt werden.

Der bereits beschriebene Kurzschlussring weist neben der elektrischen Leitfähigkeit noch den Vorteil auf, dass er als Spannelement wirkt, welches im Zusammenwirken mit der in dem Blechpaket befindlichen Vergussmasse die Rotorblechschichten zusammenhält. In diesem Zusammenhang sieht dagegen die Erfindung vor, dass nicht ein Ring an einem axialen Ende oder an beiden axialen Enden des Reluk-tanzrotors bereitgestellt wird, sondern jeweils lediglich ein Spannelement aus der Vergussmasse angeformt ist. Dieses kann dann unabhängig von einer Ringform die Haltekraft für die Rotorblechschichten erzeugen. Beispielsweise kann an einem axialen Ende für die einzelnen Flusssperren voneinander getrennte Zapfen als Spannelement angeformt sein. Der Durchmesser jedes Spannelements ist bevorzugt in radialer Richtung größer als die radiale Abmessung der Flusssperre, so dass das Spannelement an einem Rand der Flusssperre in einem Auflagebereich oder Überlappungsbereich anliegt.

Wie bereits ausgeführt, kann der Reluktanzmotor in den Rotorblechschichten weitere Flusssperren aufweisen, wobei dann in dem Zwischenteil bevorzugt jeweils paarweise zwischen einer der Flusssperren einer angrenzenden Rotorblechschicht und einer der Flusssperren der anderen angrenzenden Rotorblechschicht weitere Aussparungen und Stege des Zwischenteils angeordnet und hierdurch die abgegrenzten weiteren Räume mit der Vergussmasse ausgegossen sind.

Genauso kann vorgesehen sein, dass der Reluktanzmotor zumindest ein weiteres, jeweils zwischen zwei der Rotorblechschichten angeordnetes Zwischenteil der genannten Art aufweist. Durch die Anzahl der verwendeten Zwischenteile kann die mechanische Stabilität des Reluktanzrotors gezielt eingestellt werden, um diesen für eine vorgesehene Drehzahl in einem Reluktanzmotor zu ertüchtigen.

Entsprechend gehört zu der Erfindung auch ein Reluktanzmotor, das heißt eine elektrische Maschine, mit einer Ausführungsform des erfindungsgemäßen Reluktanzrotors, wobei der Reluktanzmotor einen Stator mit Spulen zum Rotieren des Reluktanzrotors mit einer Drehzahl durch ein abwechselndes Bestromen der Spulen aufweist.

Entsprechend gehört zu der Erfindung auch ein Reluktanzmotor, das heißt eine elektrische Maschine, mit einer Ausführungsform des erfindungsgemäßen Reluktanzrotors und mit einer Drehstromquelle zum abwechselnden Bestromen von Spulen eines Stators des Reluktanzmotors, wobei die Drehstromquelle dazu ausgelegt ist, durch das abwechselnde Bestromen den Reluktanzrotor mit einer Drehzahl zu rotieren, welche größer als 5.000 U/min ist. Der erfindungsgemäße Reluktanzmotor eignet sich durch seine hohe Drehzahl als Antriebsmotor für ein elektrisch angetriebenes Kraftfahrzeug.

Entsprechend gehört zu der Erfindung auch ein Kraftfahrzeug mit einer Ausführungsform des erfindungsgemäßen Reluktanzmotors, welcher als Antrieb für eine Fahrt des Kraftfahrzeugs ausgestaltet ist. Das erfindungsgemäße Kraftfahrzeug ist insbesondere als Kraftwagen, wie beispielsweise als Personenkraftwagen, ausgestaltet.

Im Folgenden sind Ausführungsbeispiele der Erfindung beschrieben. Hierzu zeigt:
- FIG 1: eine schematische Darstellung eines Querschnitts einer Ausführungsform des erfindungsgemäßen Reluktanzmotors,
- FIG 2: eine schematische Darstellung einer perspektivischen Ansicht einer Ausführungsform des erfindungsgemäßen Reluktanzrotors des Reluktanzmotors von FIG 1,
- FIG 3: eine schematische Darstellung eines Längsschnitts des Reluktanzrotors von FIG 2,
- FIG 4: eine schematische Darstellung einer Rotorblechschicht eines Blechpakets des Reluktanzrotors von FIG 2,
- FIG 5: eine schematische Darstellung eines Zwischenteils des Reluktanzrotors von FIG 2,
- FIG 6: eine schematische Darstellung einer Frontansichten eines axialen Endes einer Ausführungsform des erfindungsgemäßen Reluktanzrotors,
- FIG 7: eine schematische Darstellung einer Seitenansicht des Reluktanzrotors von FIG 6,
- FIG 8: eine schematische Darstellung einer Frontansichten eines axialen Endes einer weiteren Ausführungsform des erfindungsgemäßen Reluktanzrotors,
- FIG 9: eine schematische Darstellung einer Seitenansicht des Reluktanzrotors von FIG 8,
- FIG 10: eine schematische Darstellung einer Frontansichten eines axialen Endes einer weiteren Ausführungsform des erfindungsgemäßen Reluktanzrotors und
- FIG 11: eine schematische Darstellung einer Seitenansicht des Reluktanzrotors von FIG 10,
- FIG 12: eine schematische Darstellung einer Ausführungsform des erfindungsgemäßen Kraftfahrzeugs.

Bei den im Folgenden erläuterten Ausführungsbeispielen handelt es sich um bevorzugte Ausführungsformen der Erfindung. Bei den Ausführungsbeispielen stellen aber die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

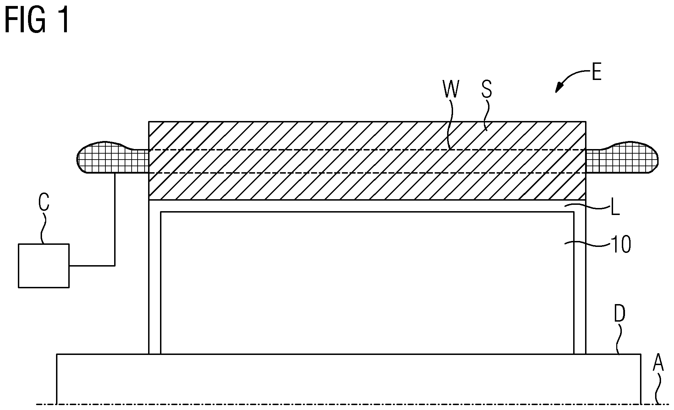

In FIG 1 ist eine elektrische Maschine E gezeigt, bei der es sich um einen Reluktanzmotor handelt. In FIG 1 stellt eine Rotationsachse A auch eine Symmetrieachse der Darstellung dar. Die elektrische Maschine E umfasst einen Stator S, in welchem Wicklungen W elektrischer Spulen angeordnet sind, wobei in FIG 1 nur eine der Wicklungen W dargestellt ist. Die Wicklungen W werden durch ein Drehstromquelle C abwechselnd bestromt, wodurch im Inneren des Stators S ein magnetisches Drehfeld in einem Luftspalt L der elektrischen Maschine E entsteht. Die Drehstromquelle C kann beispielsweise ein Wechselrichter sein oder ein festfrequentes elektrisches Versorgungsnetz.

Im Inneren des Stators S befindet sich ein Rotor 10, der drehfest mit einer Welle D verbunden ist. Die Welle D ist um die Rotationsachse A drehbar in dem Stator S gelagert. Der Rotor 10 ist eine Ausführungsform des erfindungsgemäßen Reluktanzrotors.

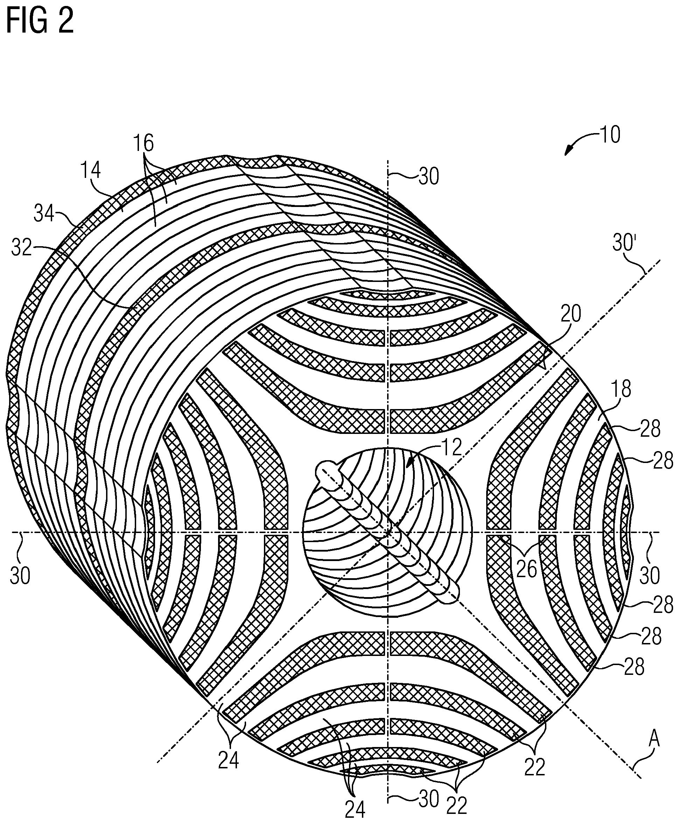

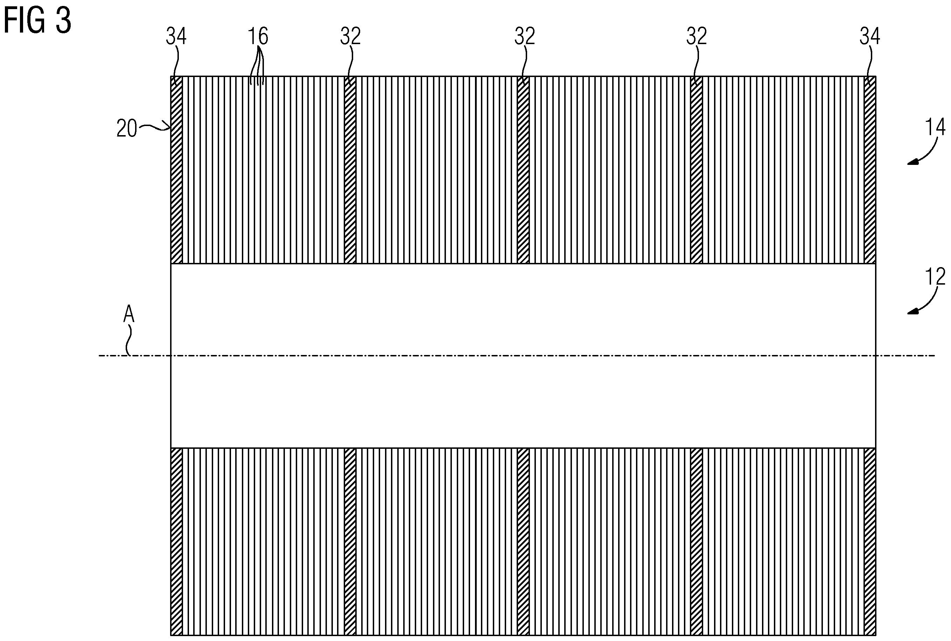

In FIG 2 und FIG 3 ist jeweils der Rotor 10 allein dargestellt.

Durch eine Durchgangsöffnung 12 des Rotors 10 ist die (in FIG 2 nicht mehr dargestellte) Welle D gesteckt. Ein Durchmesser des Rotors 10 in bezüglich der Rotationsachse A radialer Richtung kann mehr als 20 cm betragen. Eine Länge des Rotors 10 in axialer Richtung kann mehr als 30 cm betragen.

Der Rotor 10 weist als magnetisch aktiven Teil ein Blechpaket 14 auf, das aus mehreren Rotorblechschichten oder kurz Schichten 16 gebildet ist, die jeweils ferromagnetisches, insbesondere weichmagnetisches, Material aufweisen. Von den magnetischen Schichten 16 sind in der FIG 2 der Übersichtlichkeit halber nur einige mit einem Bezugszeichen versehen. Zwischen den Schichten kann sich jeweils in an sich bekannter Weise eine elektrisch isolierende Schicht befinden, um Wirbelströme in dem Blechpaket 14 zu blockieren. Jede Schicht 16 ist in dem in FIG 2 gezeigten Beispiel jeweils durch ein Rotorblech 18 gebildet. In der FIG 2 ist nur das Rotorblech 18, welches sich an einer Stirnseite 20 in axialer Richtung entlang der Achse A an einem vorderen axialen Ende des Blechpakets 14 befindet, mit einem Bezugszeichen versehen. Das Rotorblech 18 (und entsprechend auch die übrigen Rotorbleche der übrigen Schichten 16) weist Aussparungen 22 auf, die Sperren für einen magnetischen Fluss bilden, also Flusssperrbereiche oder Flusssperren. Die Aussparungen 22 können beispielsweise durch Ausstanzen der entsprechenden Formen aus Rotorblech 18 gebildet sein.

Von dem Rotorblech 18 sind somit nur Flussleitabschnitte 24 und Stege 26 zum mechanischen Verbinden der Flussleitabschnitte 24 sowie ein Außenring 28 zum mechanischen Verbinden der Flussleitabschnitte 24 aus dem ferromagnetischen Material. Die Rotorbleche der Schichten 16 können alle die gleiche Form aufweisen.

Mittels der Flussleitabschnitte 24 wird in dem Rotor 10 ein magnetischer Fluss, der durch elektrische Spulen des Stators S erzeugt wird, quer zu q-Achsen 30 des Rotors 10 entlang einer magnetischen Vorzugsrichtung geleitet. Zwischen den q-Achsen verlaufen in bekannter Weise d-Achsen 30' des Reluktanzrotors.

Die Rotorbleche 18 können in der Weise fluchtend in dem Blechpaket 14 axial hintereinander angeordnet sein, dass die Aussparungen 22 und entsprechend auch die Flussleitabschnitte 24 axial fluchten oder zumindest nur so wenig gegeneinander verdreht sind, dass sie zusammen einen Hohlraum bilden. Die Aussparungen 22 aller hintereinander angeordneten Rotorbleche 18 bilden dann insgesamt durchgehende Schächte oder Räume in dem Blechpaket 14, in denen sich eine Vergussmasse aus einem nicht-ferromagnetischen Material befinden kann.

In den Rotor 10 kann ein Läuferkäfig integriert sein, der es ermöglicht, den Rotor 10 auch asynchron zum magnetischen Drehfeld des Stators S, d.h. mit einem Schlupf, anzutreiben. Die Käfigstäbe des Läuferkäfigs können hierbei in den Schächten ausgebildet sein, indem als Vergussmasse ein elektrisch leitendes Material, z.B. Aluminium oder eine Aluminiumlegierung, bereitgestellt ist.

In dem Blechpaket 14 kann ein Zwischenteil 32 zwischen zwei der Schichten 16 angeordnet sein. Das Zwischenteil 32 kann als zylindrische Scheibe ausgestaltet sein und beispielsweise aus demselben Material wie die Rotorbleche oder aus einem nicht-ferromagnetischen Material, wie z.B. Aluminium oder einer Aluminiumlegierung oder aus einem Kunststoff gefertigt sein. Zusätzlich zu dem gezeigten Zwischenteil 32 können ein oder mehrere weitere Zwischenteile zwischen jeweils zwei der Schichten 16 angeordnet sein. Durch die Zwischenteile 32 ist eine mechanische Stabilisierung des Blechpakets 14 bewirkt.

Zwei Endscheiben 34 können an den beiden Stirnseiten, d.h. der Stirnseite 20 und dem axial gegenüberliegenden Ende des Blechpakets 14, vorgesehen sein. In FIG 2 ist die vordere Scheibe 34, die sich an der Stirnseite 20 befindet, nicht dargestellt, um die Struktur des Rotorblechs 18 darstellen zu können. Es kann vorgesehen sein, dass nur die axial außen an den Blechpaketenden liegenden Endscheiben 34 elektrischen leitend sind und eine oder mehrere Zwischenscheiben 32 im Blechpaket aus einem elektrisch isolierenden Material sind.

Die Endscheiben 34 können aus der Vergussmasse gebildet sein, die sich auch in den beschriebenen Schächten befindet. Dadurch ist eine Herstellung in einem Arbeitsgang möglich. Die Vergussmasse kann beispielsweise mittels eines Spritzguss-oder Druckgussverfahrens nach dem Auffädeln, d.h. den Aneinanderreihen der Rotorbleche 18, in die Aussparungen 22 und in den Bereich der Endscheiben 34 eingebracht worden sein.

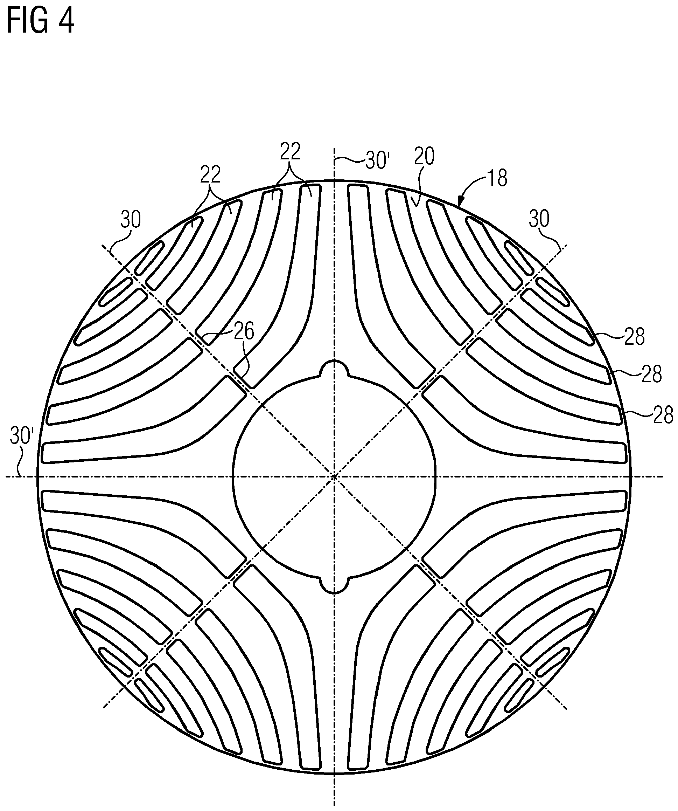

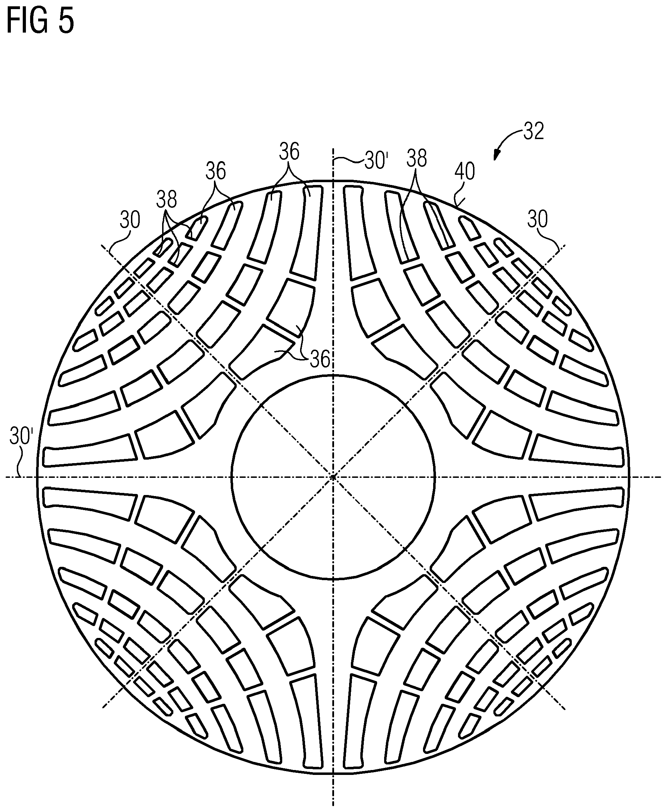

In FIG 4 ist ein einzelnes Rotorblech 18 gezeigt. In FIG 5 ist zum Vergleich eine Frontalansicht des Zwischenteils 32 gezeigt.

Bei dem Zwischenteil 32 sind im Bereich der Aussparungen 22 des Rotorblechs 18 ebenfalls Aussparungen 36 vorgesehen. Im Unterschied zu dem Rotorblech 18 ist bei dem Zwischenteil 32 allerdings vorgesehen, dass dieses mehr und/oder breitere Stege 38 aufweist, als das Rotorblech 18 Stege 26 aufweist. Auch in FIG 5 sind der Übersichtlichkeit halber nur einige der Aussparungen 36 und der Stege 38 mit Bezugszeichen versehen.

Durch seine Stege 38 ist das Zwischenteil 32 mechanisch stabiler gegenüber Fliehkräften, die auf das Blechpaket 14 wirken, wenn der Rotors 10 um die Rotationsachse A rotiert. Die Stege 38 schließen mit der jeweiligen d-Achse zumindest einen spitzen Winkel ein oder verlaufen parallel dazu, wobei jeweils diejenige d-Achse 30 als Bezugsachse gilt, die in demselben Segment wie der Steg 38 verläuft. Die Stege 38 sind mit ihrer Längserstreckung radial zu einem jeweiligen Abschnitt des Außenumfangs 40 des Blechpakets 14 hin ausgerichtet.

Die Aussparungen 36 und die Aussparungen 22 sind axial fluchtend angeordnet, das heißt sie bilden zusammen einen Raum, der mit der Vergussmasse ausgegossen ist. Hierdurch wirkt die starre Vergussmasse als formschließendes Element, über welches Fliehkräfte von den Schichten 16 auf das Zwischenteil 32 übertragen werden können.

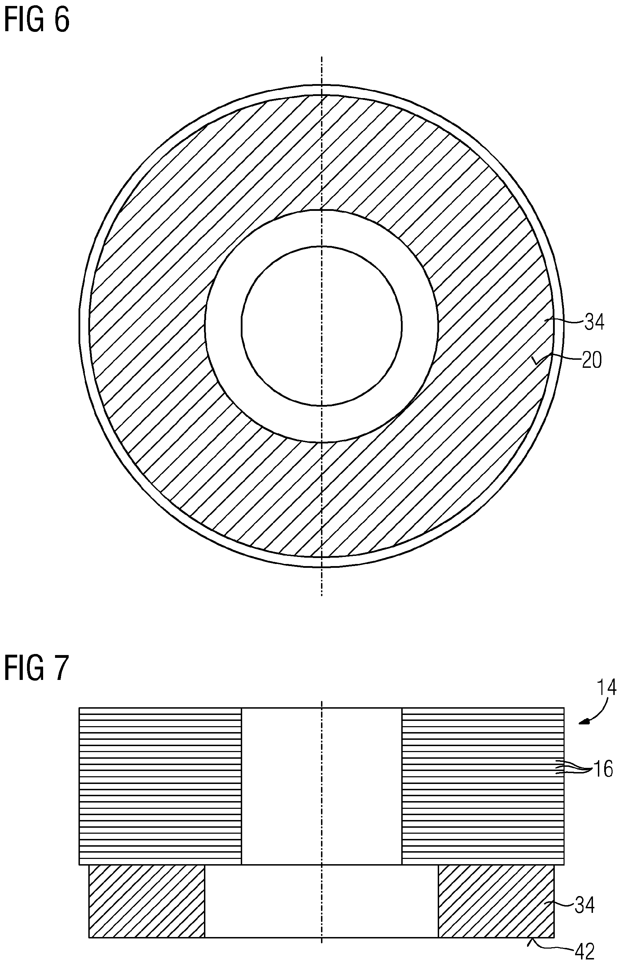

In FIG 6 bis FIG 11 ist jeweils gezeigt, wie mittels der Vergussmasse an den axialen Enden des Blechpakets 14 Spannelemente 42, 44, 46 angeformt werden können, mittels welchen die Schichten 16 und das Zwischenteil 32 in axialer Richtung fixiert werden.

In FIG 6 und FIG 7 ist gezeigt, wie mittels elektrisch leitfähiger Vergussmasse als Spannelement 42 ein Kurzschlussring als Endscheibe 34 angegossen sein kann. Da die Vergussmasse in den Schächten im Inneren des Blechpakets 14 ebenfalls elektrisch leitfähig ist, ist durch die stoffschlüssige Verbindung der gesamten Vergussmasse insgesamt ein Läuferkäfig für einen asynchronen Anlauf des Rotors 10 bereitgestellt.

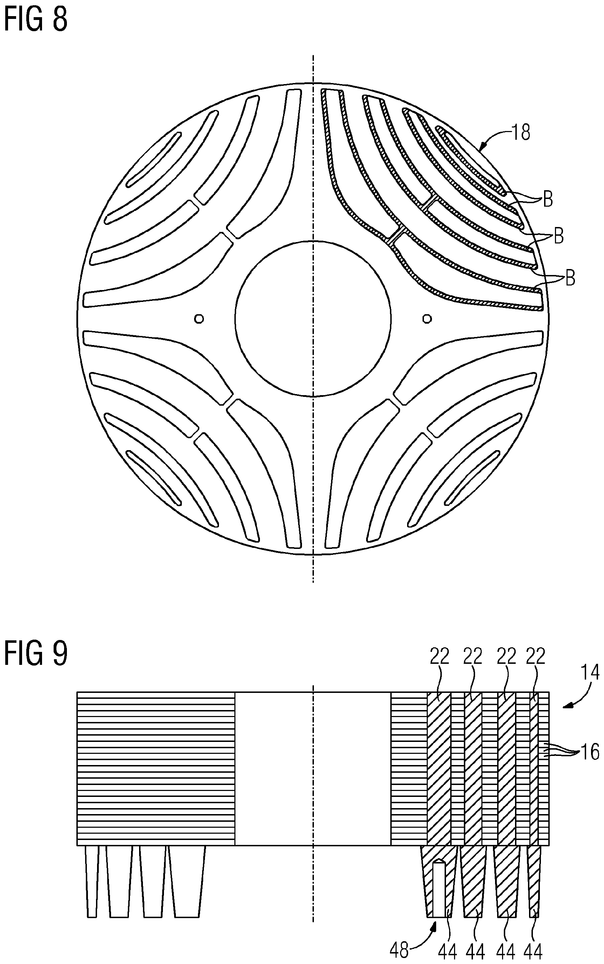

In FIG 8 und FIG 9 sind voneinander getrennte ausgebildete Spannelemente 44 gezeigt, von denen jedes aus Vergussmasse gebildet ist, die aus einem der Schächte ragt. Die Spannelemente 44 liegen in einem Überlappungsbereich B auf dem Blechpaket 18 am axialen Ende auf. Mit anderen Worten weisen die Spannelemente 44 insbesondere in radialer Richtung einen größeren Durchmesser als die Schächte der Aussparungen 22 auf. Hierdurch kann eine Druckkraft von den Spannelementen 44 auf das Rotorblech 18 übertragen werden. Durch Vorsehen von Sacklöchern 48 in einem Spannelement 44 kann Gewicht abgetragen und hierdurch der Rotor 10 ausgewuchtet werden.

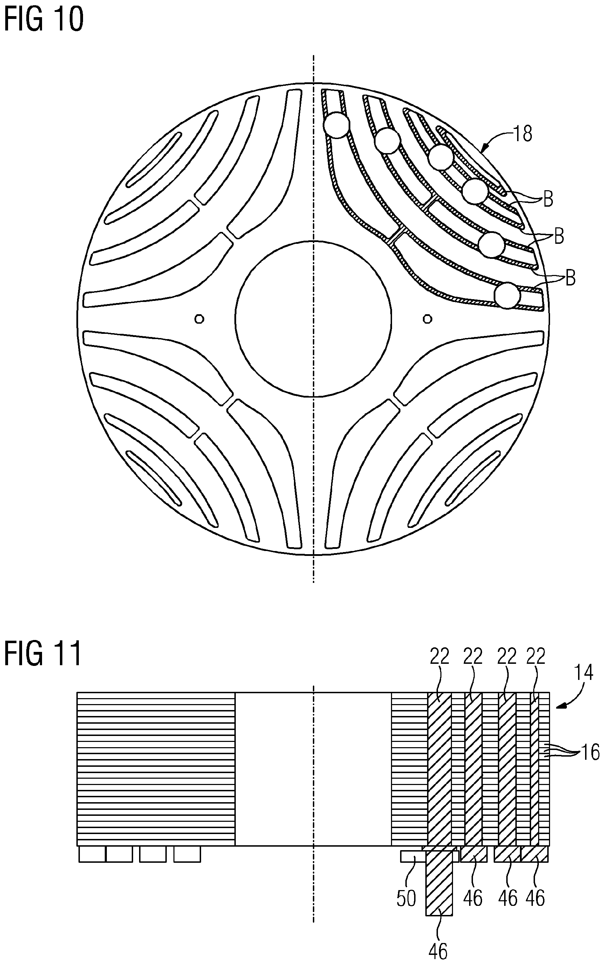

Bei der in FIG 10 und FIG 11 gezeigten Ausführungsform sind zur Gewichtseinsparung als Spannelemente 46 aus der Vergussmasse einzelne Köpfe oder Zapfen geformt. Diese weisen ebenfalls einen Durchmesser auf, der größer ist als die einzelnen Aussparungen 22, an denen sie anliegen. Hierdurch ergibt sich wieder ein Überlappungsbereich B, in welchem die Spannelement 46 eine Druckspannung auf die Schichten 16 ausüben und hierdurch das Blechpaket 14 fixieren. Auf die Spannelemente 46 können Gewichte 50 aufgesteckt werden, um den Rotor 10 auszuwuchten. Die Spannelemente 46 können hierzu keilförmig oder sich in Längserstreckung verjüngend ausgestaltet sein.

Die Ausführungsbeispiele zeigen das erfindungsgemäße Prinzip, dass zum Stabilisieren des Rotors 10 auf seiner gesamten Rotorpaketlänge in bestimmten Abständen bevorzugt amagnetische Zwischenteile 32 eingelegt sind. Mit amagnetisch ist hier insbesondere nicht-ferromagnetisch, und ganz besonders nichtweichmagnetisch zu verstehen. Vorzugsweise amagnetische Bleche mit möglichst großer Zugfestigkeit, die auch einen Druckgieß- oder Spritzgießprozess zum Einbringen der Vergussmasse thermisch überstehen und der Schließkraft der Spritzguss-oder Druckgussmaschine standhalten.

Die Zwischenteile 32 enthalten Aussparungen 36, welche bevorzugt großflächig, das heißt mit mehr als 50 Prozent, insbesondere mehr als 70 Prozent, mit den Aussparungen 22 der Flusssperren überlappen, so dass sich beim Vergießen Verknüpfungsflächen aus den beiden ausgegossenen Flächen ergeben. Dadurch ergibt sich ein stabilisierender Käfig in den Schächten des Blechpakets 14. Die Aussparungen 36 im Zwischenteil 32 sind in der Geometrie dahingehend abgestimmt, dass möglichst große Verknüpfungsflächen zum benachbarten Rotorblech 18 gegeben sind und gleichzeitig das Befüllen beziehungsweise Ausgießen mit Vergussmasse leicht möglich ist. Hier bietet sich vorzugsweise an, die Flächen der Flusssperren und die Flächen im Zwischenteil 32 in der Kontur gleich auszugestalten.

Da jedes Rotorblech 18 in Richtung der q-Achse 30 sehr labil ist, wird über die Verknüpfungsflächen zum Zwischenteil 32 mittels der Vergussmasse stabilisiert. Somit werden die Rotorbleche 18 gegen Aufweitung bei Fliehkraft gestützt.

Im Zwischenteil 32 werden zwischen den Aussparungen 36 zusätzliche Stege 38 derart angeordnet, dass die bei der Fliehkraft entstehenden Kräfte aufgenommen werden können. Die Fliehkraft jedes Rotorblechs 18 wird auch auf die erstarrte Vergussmasse in den ausgegossenen Flächen des Rotorblechs 18 übertragen. Durch die Verknüpfungsflächen wird diese Kraft auf die Flächen der Aussparungen 36 im Zwischenteil 32 übertragen. Schließlich wird diese Kraft durch die Lochleibung des Zwischenteils 32 aufgenommen. Das Zwischenteil 32 selbst ist geometrisch in der Lage, die wirkenden Kräfte aufzunehmen.

Als Vergussmasse kann vorzugsweise Aluminium oder eine Aluminiumlegierung dienen, die durch Druckgießverfahren eingebracht wird. Ebenso kann als Vergussmasse fasergefüllter Kunststoff oder Harz verwendet werden, die durch Spritzgießen oder Ausgießen eingebracht werden.

Die Anzahl der Zwischenteile 32 ist abhängig von der Paketlänge des Blechpakets 14 und der geforderten Drehzahl. Je mehr Zwischenteile 32, desto mehr Abstützung gegen Fliehkraft wird erzielt und desto größer ist die Gesamtstabilität des Blechpakets 14.

Wird ein elektrisch leitender Werkstoff als Vergussmasse eingesetzt, besteht die Möglichkeit, an den Rotorenden Kurzschlussringe 42 auszugießen, wodurch zusätzlich ein Anlaufkäfig ausgebildet wird. Dabei wird an den beiden Paketenden eine geschlossene Kontur, die die einzelnen Flächen der Flusssperren verbindet, angebracht.

Es besteht auch die Möglichkeit, elektrisch leitende Vergussmasse, vorzugsweise eine Aluminiumlegierung, ohne Ausbildung von Kurzschlussringen einzusetzen. Hier dient die Vergussmasse rein der Stützfunktion. Es gibt keinen Anlaufkäfig. Dabei werden an den beiden Paketenden einzelne Konturen 44, 46 ausgebildet, die die Flächen der Flusssperren nicht miteinander verbinden. Diese Konturen sind im Vergleich zu Flusssperrflächen etwas größer ausgebildet, so dass in axialer Richtung in einem Überlappungsbereich B ein Verspannen des Rotorblechpakets 14 erreicht wird. Diese angegossenen Körper 44, 46 können zum Wuchten verwendet werden. Entweder können hierbei durch Aufsetzen von Domen, das heißt durch Festlegen der Zapfenlänge der Stützelemente 44, 46, auf die Rotorbleche 18 oder durch Verstemmen von Gewichten 50 (positives Wuchten) oder durch Bohrungen 48 (negatives Wuchten) Unwuchten ausgeglichen werden.

Setzt man als Vergussmasse ein nicht leitendes Material ein, so dient diese jedenfalls als reines Stützelement.

Durch das Vorsehen der Zwischenteile 32 und der Vergussmasse können die relativ instabilen oder labilen Rotorbleche 18 mit ihren Flusssperren 22 bezüglich der Drehzahleignung stabilisiert werden. Der Aufweitung eines Rotorblechs 18 wirken die ausgegossenen Bereiche entgegen.

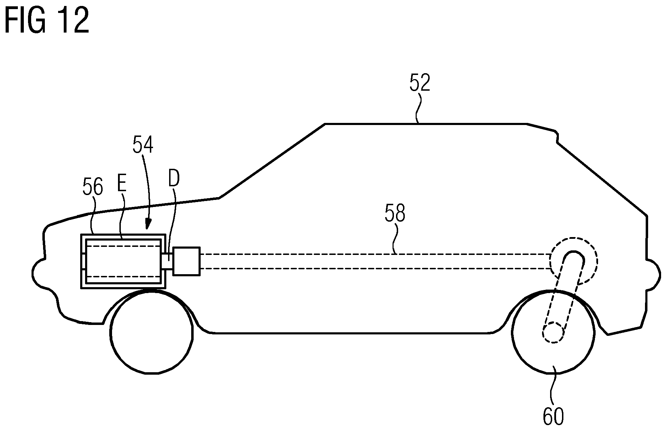

In FIG 12 ist in schematischer Darstellung ein Kraftfahrzeug 52 gezeigt, das beispielsweise ein Personenkraftwagen sein kann. Das Kraftfahrzeug 52 weist einen elektrischen Antriebsmotor 54 auf, in dessen Gehäuse 56 sich beispielsweise die elektrische Maschine E oder eine andere Ausführungsform des erfindungsgemäßen Reluktanzmotors befinden kann. Die Welle D der elektrischen Maschine E kann z.B. mit einem Antriebsstrang 58 des Kraftfahrzeugs 52 gekoppelt sein. Der Antriebsstrang 58 kann beispielsweise ein Hinterrad 60 des Kraftwagens 52 antreiben.

Insgesamt ergeben sich somit als Vorteile, dass die Drehzahltauglichkeit des erfindungsgemäßen Reluktanzrotors erhöht wird. Die Stegbreite in den Rotorblechen 18 am Außendurchmesser, das heißt die Ringbreite des Ringes 28, sollte möglichst klein gewählt werden, um hierdurch einen möglichst hohen Wirkungsgrad zu erzielen, da der magnetische Fluss im Blechpaket optimiert wird. Der Außenring 28 und die Stege 26 können sogar ganz entfallen, das heißt es ist ein Verzicht auf Stege im Rotorblech zwischen den Flussleitabschnitten möglich, da die Vergussmasse die hierdurch entstehenden einzelnen Rotorbleche fixiert. Dadurch wird ebenfalls ein verbesserter Wirkungsgrad erzielt. Durch die Vergussmasse wird das Blechpaket 14 in sich versteift, was eine Vereinfachung einer spanenden Bearbeitung des Außenumfangs 40 des Blechpakets 14 ermöglicht. Durch die fixierende Wirkung der Vergussmasse ist auch keine weitere Bandage entlang des Außenumfangs 40 nötig, so dass sich die Breite des Luftspalts L zwischen Rotor und Stator optimieren lässt. Der Rotor 10 weist auch eine verbesserte Biegeeigenfrequenz durch die Versteifung des Gesamtverbundes auf, der aus Welle D und Blechpaket 14 gebildet ist. Durch die Anzahl der Zwischenteile 32 lässt sich modular die Drehzahleignung einstellen. Durch das Vergießen ergibt sich ein einstückiges Blechpaket 14, dass als einzelnes Bauteil gehandhabt werden kann, was die Bearbeitung und Montage vereinfacht.

Insgesamt ist durch die Ausführungsbeispiele gezeigt, wie mittels der Erfindung ein Reluktanzrotor mit Zwischenteil für eine hohe Drehzahl bei hohen Wirkungsraden für ein elektrisch angetriebenes Kraftfahrzeug (eCar) bereitgestellt werden kann.

## Patentansprüche

1. Reluktanzrotor (10) für eine elektrische Maschine (E), welcher ein Blechpaket (18) mit Rotorblechschichten (16) aus einem ferromagnetischen Material aufweist, wobei jede Rotorblechschicht (16) eine durch eine Aussparung in dem ferromagnetischen Material gebildete Flusssperre (22) aufweist, wobei der Reluktanzrotor (10) ein zwischen einer ersten und einer zweiten der Rotorblechschichten (16) angeordnetes Zwischenteil (32) mit Aussparungen (36) und die Aussparungen (36) voneinander abgrenzenden Stegen (38) aufweist, wobei die Aussparungen (36) des Zwischenteils (32) und die Stege (38) axial zwischen den Flusssperren (22) angeordnet sind und hierdurch die Aussparungen (36) des Zwischenteils (32) und die Flusssperren (22) gemeinsam einen Raum abgrenzen und der Raum mit einer nicht-ferromagnetischen Vergussmasse ausgegossen ist,
**dadurch gekennzeichnet, dass**
an einem axialen Ende oder an beiden axialen Enden des Reluktanzrotors (10) aus der Vergussmasse jeweils voneinander getrennte Spannelemente (42, 44, 46) angeformt sind, welche in einem Überlappungsbereich (B) auf dem Bleckpaket (18) an dem axialen Ende aufliegen und welche in Zusammenwirken mit der Vergussmasse in dem ausgefüllten Raum die Rotorblechschichten (16) zusammenhalten.

2. Reluktanzrotor (10) nach Anspruch 1, wobei die Stege (38) dazu ausgebildet sind, eine bei einer bestimmungsgemäßen Rotation des Reluktanzrotors (10) wirkenden Fliehkraft in dem Zwischenteil (32) radial nach innen hin abzuleiten.

3. Reluktanzrotor (10) nach einem der vorhergehenden Ansprüche, wobei sich jeder Steg (38) in seiner Längserstreckung zu einem Außenumfang (40) des Reluktanzrotors (10) hin erstreckt.

4. Reluktanzrotor (10) nach einem der vorhergehenden Ansprüche, wobei sich jeder Steg (38) in seiner Längserstreckung jeweils in einem spitzen Winkel oder parallel zu einer jeweiligen q-Achse (30) des Reluktanzrotors (10) erstreckt.

5. Reluktanzrotor (10) nach einem der vorhergehenden Ansprüche, wobei ein Material des Zwischenteils (32) zumindest in radialer Richtung eine größere Zugfestigkeit als das ferromagnetische Material der Rotorblechschichten (16) aufweist.

6. Reluktanzrotor (10) nach einem der vorhergehenden Ansprüche, wobei das Zwischenteil (32) aus einem nicht-ferromagnetischen Material gebildet ist.

7. Reluktanzrotor (10) nach einem der vorhergehenden Ansprüche, wobei die Vergussmasse elektrisch leitfähig ist und aus einem Kunststoff mit einem elektrisch leitfähigen Füllstoff gebildet ist.

8. Reluktanzrotor (10) nach Anspruch 7, wobei der Kunststoff als Füllstoff elektrisch leitfähige Fasern oder ein elektrisch leitfähiges Granulat aufweist.

9. Reluktanzrotor (10) nach einem der vorhergehenden Ansprüche, wobei die Vergussmasse Aluminium, eine Aluminiumlegierung, einen fasergefüllten Kunststoff oder Harz umfasst.

10. Reluktanzrotor (10) nach einem der vorhergehenden Ansprüche, wobei bei zumindest einem der Spannelemente (44) zum Auswuchten des Reluktanzrotors (10) eine Bohrung (48) oder ein Gewicht (50) vorgesehen ist.

11. Reluktanzrotor (10) nach einem der vorhergehenden Ansprüche, wobei eine Gesamtfläche der Aussparungen (36) des Zwischenteils (32) und der Stege (38) zusammengenommen eine Kontur aufweist, die der jeweiligen Kontur der Flusssperre (22) der ersten und/oder der zweiten Rotorblechschicht (16) entspricht.

12. Reluktanzrotor (10) nach einem der vorhergehenden Ansprüche, wobei die Rotorblechschichten (16) jeweils weitere Flusssperren (22) aufweisen und jeweils paarweise zwischen einer der Flusssperren (22) der ersten Rotorblechschicht (16) und einer der Flusssperren (22) der zweiten Rotorblechschicht (16) weitere Aussparungen (36) und Stege (38) des Zwischenteils (32) angeordnet und die hierdurch abgegrenzten weiteren Räume mit der Vergussmasse ausgegossen sind.

13. Reluktanzrotor (10) nach einem der vorhergehenden Ansprüche, wobei der Reluktanzrotor (10) zumindest ein weiteres, jeweils zwischen zwei der Rotorblechschichten (16) angeordnetes Zwischenteil (32)der genannten Art aufweist.

14. Reluktanzmotor (E) mit einem Reluktanzrotor (10) nach einem der vorhergehenden Ansprüche, wobei der Reluktanzmotor (E) einen Stator (S) mit Spulen (W) zum Rotieren des Reluktanzrotors (10) mit einer Drehzahl durch ein abwechselndes Bestromen der Spulen (W) aufweist.

15. Kraftfahrzeug (52) mit einem Reluktanzmotor (E) nach Anspruch 14 als Antriebsmotor für eine Fahrt des Kraftfahrzeugs (52) .

## Claims

1. Reluctance rotor (10) for an electric machine (E), which comprises a laminated core (18) with rotor lamination layers (16) made of a ferromagnetic material, wherein each rotor lamination layer (16) has a flux barrier (22) formed by a recess in the ferromagnetic material, wherein the reluctance rotor (10) has an intermediate part (32) with recesses (36) arranged between a first and a second of the rotor lamination layers (16), and separators (38) delimiting the recesses (36) from one another, wherein the recesses (36) of the intermediate part (32) and the separators (38) are axially arranged between the flux barriers (22) and, as a result, the recesses (36) of the intermediate part (32) and the flux barriers (22) together delimit a space and the space is cast with a non-ferromagnetic casting compound,
**characterised in that**
in each case clamping elements (42, 44, 46) which are separate from one another are integrally formed from the casting compound at one axial end or at both axial ends of the reluctance rotor (10), said clamping elements bearing against the axial end in an overlapping region (B) on the laminated core (18) and, in cooperation with the casting compound in the filled-up space, holding together the rotor lamination layers (16) .

2. Reluctance rotor (10) according to claim 1, wherein the separators (38) are configured to divert radially inwardly centrifugal force in the intermediate part (32), said centrifugal force acting in the case of a corresponding rotation of the reluctance rotor (10).

3. Reluctance rotor (10) according to one of the preceding claims, wherein each separator (38) extends in its longitudinal extent toward an outer circumference (40) of the reluctance rotor (10).

4. Reluctance rotor (10) according to one of the preceding claims, wherein each separator (38) in each case extends in its longitudinal extent at an acute angle or parallel to one respective q-axis (30) of the reluctance rotor (10).

5. Reluctance rotor (10) according to one of the preceding claims, wherein at least in the radial direction a material of the intermediate part (32) has a greater tensile strength than the ferromagnetic material of the rotor lamination layers (16) .

6. Reluctance rotor (10) according to one of the preceding claims, wherein the intermediate part (32) is formed from a non-ferromagnetic material.

7. Reluctance rotor (10) according to one of the preceding claims, wherein the casting compound is electrically conductive and is formed from a plastics material with an electrically conductive filler.

8. Reluctance rotor (10) according to claim 7, wherein the plastics material has electrically conductive fibres or an electrically conductive granulate as the filler.

9. Reluctance rotor (10) according to one of the preceding claims, wherein the casting compound comprises aluminium, an aluminium alloy, a fibre-filled plastics material or resin.

10. Reluctance rotor (10) according to one of the preceding claims, wherein a bore (48) or a weight (50) is provided in at least one of the clamping elements (44) for balancing the reluctance rotor (10).

11. Reluctance rotor (10) according to one of the preceding claims, wherein a total surface area of the recesses (36) of the intermediate part (32) and the separators (38) taken together comprises a contour which corresponds to the respective contour of the flux barrier (22) of the first and/or the second rotor lamination layer (16).

12. Reluctance rotor (10) according to one of the preceding claims, wherein the rotor lamination layers (16) in each case comprise further flux barriers (22) and in each case further recesses (36) and separators (38) of the intermediate part (32) are arranged in pairs between one of the flux barriers (22) of the first rotor lamination layer (16) and one of the flux barriers (22) of the second rotor lamination layer (16) and the further spaces delimited thereby are cast with the casting compound.

13. Reluctance rotor (10) according to one of the preceding claims, wherein the reluctance rotor (10) has at least one further intermediate part (32) of the aforementioned type arranged in each case between two of the rotor lamination layers (16).

14. Reluctance motor (E) comprising a reluctance rotor (10) according to one of the preceding claims, wherein the reluctance motor (E) comprises a stator (S) with coils (W) for rotating the reluctance rotor (10) at a rotational speed by an alternating supply of current to the coils (W).

15. Motor vehicle (52) having a reluctance motor (E) according to claim 14 as a drive motor for moving the motor vehicle (52).

## Revendications

1. Rotor (10) à réluctance pour une machine (E) électrique, lequel a un paquet (18) de tôles à couches (16) de tôle rotorique en un matériau ferromagnétique, chaque couche (16) de tôle rotorique ayant un blocage (22) de flux formé dans un évidement du matériau ferromagnétique, le rotor (10) à réluctance ayant une partie (32) intermédiaire à évidements (36) disposée entre une première et une deuxième couches (16) de tôle rotorique et les évidements (36) ayant des nervures (38) les limitant les uns par rapport aux autres, les évidements (36) de la partie (32) intermédiaire et les nervures (38) étant disposés axialement entre les blocages (22) de flux et ainsi les évidements (36) de la partie (32) intermédiaire et les blocages (22) de flux délimitant en commun un espace et l'espace étant rempli d'une composition de scellement non ferromagnétique,
**caractérisé en ce qu'**
à une extrémité axiale ou aux deux extrémités axiales du rotor (10) à réluctance, viennent de la composition de scellement, respectivement des éléments (42, 44, 46) de serrage distincts, qui, dans une région (B) de chevauchement, s'appliquent au paquet (18) de tôles à l'extrémité axiale, et qui, en coopération avec la masse de scellement dans l'espace rempli, maintiennent ensemble les couches (16) de tôle rotorique.

2. Rotor (10) à réluctance suivant la revendication 1, dans lequel les nervures (38) sont constituées de manière à dévier radialement vers l'intérieur dans la partie (32) intermédiaire une force centrifuge agissant lors d'une rotation, conforme aux prescriptions du rotor (10) à réluctance.

3. Rotor (10) à réluctance suivant l'une des revendications précédentes, dans lequel chaque nervure (38) s'étend dans son étendue longitudinale vers un pourtour (40) extérieur du rotor (10) à réluctance.

4. Rotor (10) à réluctance suivant l'une des revendications précédentes, dans lequel chaque nervure (38) s'étend dans son étendue longitudinale respectivement suivant un angle aigu ou parallèlement à un axe (30) q du rotor (10) à réluctance.

5. Rotor (10) à réluctance suivant l'une des revendications précédentes, dans lequel un matériau de la partie (32) intermédiaire a, au moins dans la direction radiale, une résistance à la traction plus grande que le matériau ferromagnétique des couches (16) de tôle rotorique.

6. Rotor (10) à réluctance suivant l'une des revendications précédentes, dans lequel la partie (32) intermédiaire est en un matériau non ferromagnétique.

7. Rotor (10) à réluctance suivant l'une des revendications précédentes, dans lequel la composition de scellement est conductrice de l'électricité et formée d'une matière plastique ayant une charge conductrice de l'électricité.

8. Rotor (10) à réluctance suivant la revendication 7, dans lequel la matière plastique a comme charge des fibres conductrices de l'électricité ou un granulé conducteur de l'électricité.

9. Rotor (10) à réluctance suivant l'une des revendications précédentes, dans lequel la composition de scellement comprend de l'aluminium, un alliage d'aluminium, une matière plastique ou une résine chargée de fibres.

10. Rotor (10) à réluctance suivant l'une des revendications précédentes, dans lequel, pour au moins l'un des éléments (44) de serrage, il est prévu, pour équilibrer le rotor (10) à réluctance, un trou (48) ou une masselotte (50).

11. Rotor (10) à réluctance suivant l'une des revendications précédentes, dans lequel une surface totale des évidements (36) de la partie (32) intermédiaire et des nervures (38) ont pris ensemble un contour, qui correspond au contour du blocage (22) de flux de la première et/ou de la deuxième couche (16) de tôle rotorique.

12. Rotor (10) à réluctance suivant l'une des revendications précédentes, dans lequel les couches (16) de tôle rotorique ont chacune d'autres blocages (22) de flux et, respectivement par paire, entre l'un des blocages (22) de flux de la première couche (16) de tôle rotorique et l'un des blocages (22) de flux de la deuxième couche (16) de tôle rotorique, il est prévu d'autres évidements (36) et nervures (38) de la partie (32) intermédiaire, et les autres espaces ainsi délimités sont remplis de la composition de scellement.

13. Rotor (10) à réluctance suivant l'une des revendications précédentes, dans lequel le rotor (10) à réluctance a au moins une autre partie (32) intermédiaire du type mentionné, disposée entre deux des couches (16) de tôle rotorique.

14. Moteur (E) à réluctance, comprenant un rotor (10) à réluctance suivant l'une des revendications précédentes, le moteur (E) à réluctance ayant un stator (S) à bobines (W) pour la rotation du rotor (10) à réluctance à un régime, par une alimentation en courant en alternance des bobines (W).

15. Véhicule (52) automobile ayant un moteur (E) à réluctance suivant la revendication 14, comme moteur de traction pour un déplacement du véhicule (52) automobile.
